(19) **Europäisches Patentamt**
**European Patent Office**
**Office européen des brevets**

(11) **EP 2 723 545 B1**

(12) **FASCICULE DE BREVET EUROPEEN**

(45) Date de publication et mention
de la délivrance du brevet:
**04.03.2015 Bulletin 2015/10**

(51) Int Cl.:
***B29B 13/02*** (2006.01)   ***B29C 49/64*** (2006.01)
***B29C 49/68*** (2006.01)

(21) Numéro de dépôt: **12734963.7**

(22) Date de dépôt: **18.06.2012**

(86) Numéro de dépôt international:
**PCT/FR2012/051366**

(87) Numéro de publication internationale:
**WO 2012/175854 (27.12.2012 Gazette 2012/52)**

(54) **PROCÉDÉ DE CHAUFFE D'UNE ÉBAUCHE DE RÉCIPIENT À FAIBLE TEMPÉRATURE DE PAROI EXTERNE ET UNITÉ DE CHAUFFAGE D'ÉBAUCHES**

VERFAHREN ZUM ERHITZEN EINES BEHÄLTERROHLINGS MIT NIEDRIGER AUSSENWANDTEMPERATUR UND EINHEIT ZUM ERHITZEN VON ROHLINGEN

METHOD FOR HEATING A CONTAINER BLANK, THE TEMPERATURE OF THE OUTER WALL OF WHICH IS LOW, AND UNIT FOR HEATING BLANKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2011 FR 1155561**

(43) Date de publication de la demande:
**30.04.2014 Bulletin 2014/18**

(73) Titulaire: **Sidel Participations**
**76930 Octeville sur Mer (FR)**

(72) Inventeurs:
• **FEUILLOLEY, Guy**
**F-76930 Octeville Sur Mer (FR)**
• **BELLEC, Caroline**
**F-76930 Octeville Sur Mer (FR)**
• **MAILLOT, Isabelle**
**F-76930 Octeville Sur Mer (FR)**
• **DERRIEN, Mikael**
**F-76930 Octeville Sur Mer (FR)**

(74) Mandataire: **Demulsant, Xavier**
**Dejade & Biset**
**35, rue de Châteaudun**
**75009 Paris (FR)**

(56) Documents cités:
**FR-A1- 2 935 924   US-A1- 2007 096 352**

**Description**

L'invention a trait à la fabrication des récipients, notamment bouteilles, flacons, par formage à partir d'ébauches en matière plastique tel que polyéthylène téréphtalate (PET).

Dans ce qui suit, on suppose que les ébauches sont des préformes, bien qu'il puisse s'agir de récipients intermédiaires ayant subi un premier soufflage et destiné à en subir un second en vue d'obtenir le récipient final.

La fabrication des récipients comporte deux étapes principales : une étape de chauffe au cours de laquelle les ébauches sont exposées au rayonnement électromagnétique de sources émettant dans l'infrarouge, suivie d'une étape de formage au cours de laquelle un fluide sous pression est injecté dans les ébauches ainsi chauffées pour leur donner la forme finale du récipient.

L'épaisseur de paroi des préformes est généralement de plusieurs millimètres, tandis que l'épaisseur du récipient final est inférieur au millimètre (ordinairement de l'ordre de quelques dixièmes de millimètres). On comprend donc que le taux de déformation de la matière (qui subit un double étirage : axial et radial) varie dans l'épaisseur de la préforme. Plus précisément, le taux d'étirage de la paroi intérieure de la préforme est supérieur au taux d'étirage de la paroi externe, dans des proportions correspondant aux variations de surface des parois lors du soufflage.

Compte tenu de la complexité des formes du récipient fini, ce qui rend difficile le calcul de la surface finale des parois interne et externe du récipient, on évalue le taux de déformation de la matière en calculant un taux de biorientation de chaque paroi, défini par le produit des taux d'étirage diamétral et axial de la paroi considérée.

Prenons l'exemple d'une préforme de 27g, d'un diamètre extérieur $D_{ext}$ de 22,26 mm, d'un diamètre intérieur $D_{int}$ de 14,56 mm, d'une longueur extérieure $L_{ext}$ sous col de 85 mm, et d'une longueur intérieure $L_{int}$ sous col de 79 mm, destinée à former un récipient d'une capacité de 0,5 l d'un diamètre moyen D de 65,5 mm (la différence entre le diamètre intérieur et le diamètre extérieur du récipient peut être négligée) et d'une longueur sous col L moyenne de 243 mm.

Les taux d'étirage diamétral $TD_{ext}$ et axial $TA_{ext}$ de la paroi externe sont calculés comme suit :

$$TD_{ext} = \frac{D}{D_{ext}} = \frac{65,5}{22,26} = 2,95$$

$$TA_{ext} = \frac{L}{L_{ext}} = \frac{243}{85} = 2,86$$

Le taux de biorientation, noté $BO_{ext}$ de la paroi externe est par conséquent calculé comme suit :

$$BO_{ext} = TD_{ext} \times TA_{ext} = 2,95 \times 2,86 = 8,44$$

Les taux d'étirage diamétral $TD_{int}$ et axial $TA_{int}$ de la paroi interne sont calculés comme suit :

$$TD_{int} = \frac{D}{D_{int}} = \frac{65,5}{14,56} = 4,5$$

$$TA_{int} = \frac{L}{L_{int}} = \frac{243}{79} = 3,08$$

Le taux de biorientation, noté $BO_{ext}$ de la paroi externe est par conséquent calculé comme suit :

$$BO_{int} = TD_{int} \times TA_{int} = 4,5 \times 3,08 = 13,86$$

Les calculs précédents fournissent le ratio R entre les taux de bioorientation $BO_{int}$ et $BO_{ext}$ des parois interne et externe :

$$R = \frac{BO_{int}}{BO_{ext}} = \frac{13,86}{8,44} \approx 1,65$$

En d'autres termes, la paroi interne de la préforme présente un taux de biorientation supérieur d'environ 65% à celui de la paroi externe.

Cette différence d'étirage entre la paroi interne et la paroi externe provoque l'apparition de contraintes dans la matière entre les parois, qui rend difficile la prise d'empreinte et donc un formage correct du récipient.

C'est pourquoi il apparaît nécessaire de conférer à la paroi interne une capacité de déformation supérieure à la paroi externe. Dans ce cadre, il est connu d'adapter le processus de chauffe de manière à obtenir une température $T_{int}$ de paroi interne supérieure à la température $T_{ext}$ de paroi externe ou, en d'autres termes, un delta $\Delta T$ de température positif (où $\Delta T = T_{int}-T_{ext}$). En effet, dans les procédés de chauffe classique (notamment à lampes halogènes), le delta $\Delta T$ de température est par défaut négatif, la température $T_{ext}$ de paroi externe étant supérieure à la température $T_{int}$ de paroi interne.

Comme cela est expliqué dans la demande de brevet français FR 2 935 924 (SIDEL), pour obtenir un tel delta positif de température, on joue essentiellement sur deux paramètres : d'une part, la ventilation des préformes, de manière à refroidir la paroi externe, d'autre part, le temps de stabilisation thermique des préformes à l'issue de la chauffe, de manière à équilibrer les températures par conduction thermique.

Toutefois, un contrôle fin du delta de température est difficile.

De plus, le bilan énergétique est relativement mauvais. En effet, non seulement la puissance du rayonnement nécessaire pour amener la température interne à la valeur souhaitée est importante (ce qui nécessite une puissance électrique proportionnellement élevée), mais il est nécessaire de dépenser un surcroît de puissance pour ventiler la paroi externe de manière à abaisser sa température.

Le document US 2007/0096352 décrit un procédé de chauffe d'une ébauche selon le préambule de la revendication 1 et une unité de chauffe d'ébauches selon le préambule de la revendication 7.

Un premier objectif est d'améliorer la capacité de formage des récipients en contrôlant mieux le delta de température entre paroi interne et paroi externe.

Un deuxième objectif est d'améliorer le bilan énergétique de la chauffe, tout en conservant (et de préférence en améliorant) la qualité du récipient final.

A cet effet, il est proposé, en premier lieu, un procédé de chauffe d'une ébauche en matière plastique pour la fabrication d'un corps creux par formage à partir de l'ébauche, qui comprend les opérations consistant à :

- introduire l'ébauche dans un four muni de sources de rayonnement électromagnétique monochromatique ou pseudo-monochromatique émettant dans l'infrarouge ;
- exposer l'ébauche au rayonnement des sources, réglées à une puissance d'émission prédéterminée, pendant un temps d'exposition prédéterminé ;
- mesurer une température sur une paroi externe de l'ébauche ;
- ajuster le temps d'exposition et/ou la puissance d'émission tant que la température $T_{ext}$ de l'ébauche, mesurée à une sortie du four,

n'est pas comprise entre $T_g$ et $1,8 \cdot T_g$, où $T_g$ est la température de transition vitreuse de la matière.

Il a été constaté que, dans ces conditions, la température d'une paroi interne de l'ébauche demeure supérieure à la température de la paroi externe, c'est-à-dire que le delta de température est positif. Il en résulte, pour une puissance électrique consommée relativement faible, une meilleure soufflabilité des ébauches, et notamment une diminution des contraintes résiduelles dans le produit final.

La mesure de température peut être ponctuelle, ou consister à établir un profil thermique de la paroi externe de l'ébauche au moyen d'une caméra thermique.

La variation du temps d'exposition peut être effectuée par coupure de certaines sources, ou par coupure de groupes de sources, ou encore par variation d'une vitesse de défilement des ébauches dans le four.

Il est proposé, en deuxième lieu, un produit programme d'ordinateur destiné à être stocké en mémoire d'une unité de traitement et/ou stocké sur un support mémoire lisible par un lecteur d'une unité de traitement, comprenant des instructions pour la mise en oeuvre des opérations évoquées ci-dessus.

Il est proposé, en troisième lieu, une unité de chauffe d'ébauches de corps creux en matière plastique, qui comprend :

- un four muni d'une pluralité de sources de rayonnement électromagnétique monochromatique ou pseudo-monochromatique émettant dans l'infrarouge, pour la chauffe des ébauches à une puissance d'émission prédéterminée, et pendant un temps d'exposition prédéterminé,
- une sonde thermique disposée à une sortie du four, agencée pour effectuer une prise de température sur une paroi externe des ébauches ;
- une unité de contrôle programmée pour ajuster la puissance d'émission et/ou le temps d'exposition tant que la température $T_{ext}$ de l'ébauche, mesurée à la sortie du four, n'est pas comprise entre $T_g$ et $1{,}8 \cdot T_g$, où $T_g$ est la température de transition vitreuse de la matière.

Les sources de rayonnement électromagnétique, qui sont de préférence organisées en colonnes dont la puissance peut être modulée séparément, sont par exemple des lasers, et notamment des diodes laser. Selon un mode particulier de réalisation, il s'agit de diodes laser de type VCSEL.

D'autres objets et avantages de l'invention apparaîtront à la lumière de la description de modes préférés de réalisation, description faite ci-après en référence aux dessins annexés dans lesquels :

- la figure 1 est une vue en perspective illustrant partiellement une unité de chauffe comprenant une paroi tapissée de sources infrarouge ponctuelles, devant laquelle défilent des préformes ;
- la figure 2 est une vue d'élévation en coupe transversale de l'unité de chauffe de la figure 1 ;
- la figure 3 est un diagramme illustrant divers profils de température dans l'épaisseur de la paroi de la préforme.

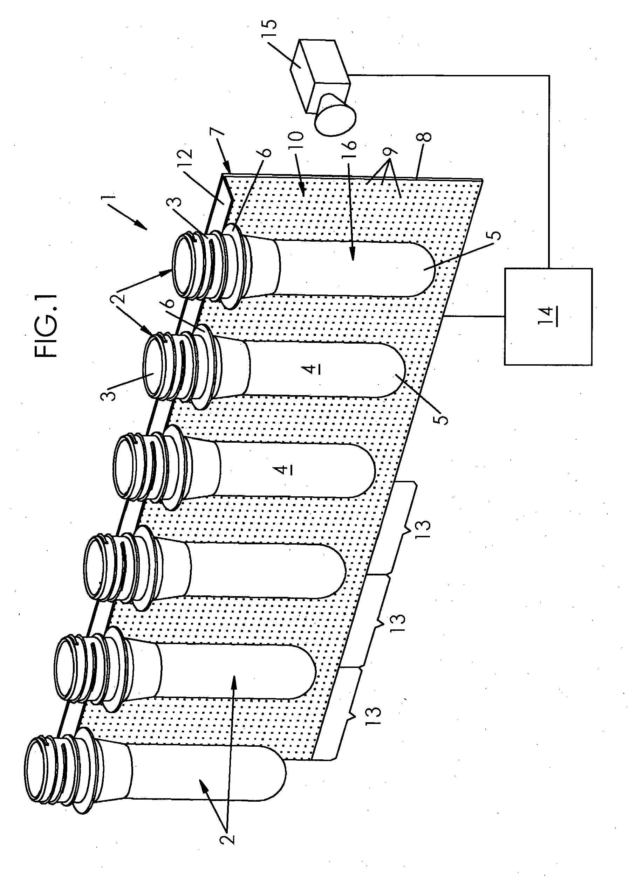

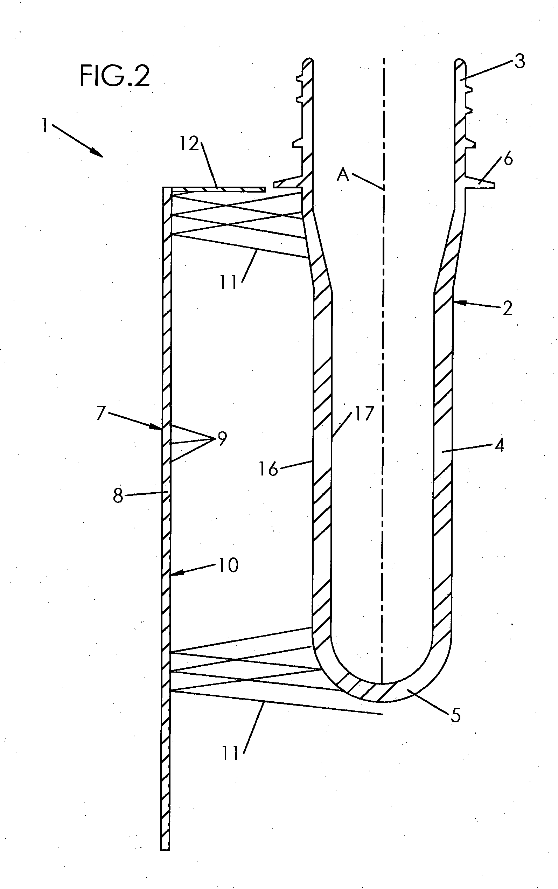

Sur les figures 1 et 2 est schématiquement représentée une unité **1** de chauffe d'ébauches **2** de récipients. Les ébauches **2** sont en l'occurrence des préformes, mais il pourrait s'agir de récipients intermédiaires ayant subi des opérations temporaires de formage et destinées à subir une ou plusieurs opérations définitives pour l'obtention des récipients définitifs.

Chaque préforme **2,** réalisée dans une matière thermoplastique telle que polyéthylène téréphtalate (PET), comprend un col **3,** qui n'est pas (ou peu) soumis à la chauffe et dont la forme est définitive, et un corps **4** qui se termine, à l'opposé du col **3,** par un fond **5** hémisphérique (ou, dans certains cas, conique).

A la jonction entre le col **3** et le corps **4,** la préforme **2** présente une collerette **6** par laquelle la préforme **2** est suspendue à diverses étapes de la fabrication du récipient.

Dans l'unité **1** de chauffe toutefois, les préformes **2** sont fixées à des supports pivotants appelés tournettes, qui entraînent les préformes **2** en rotation autour de leur axe **A** principal de manière à exposer la partie sous col (l'ensemble du corps **4** et le fond **5)** à la chauffe. Chaque tournette est fixée à une chaîne entraînée par une roue, et comprend un pignon engrenant un moyen d'engrènement fixe ou mobile, telle qu'une chaîne ou une courroie, de sorte que chaque point situé sur la circonférence de la préforme **1** décrit sur le trajet de la préforme **2** une cycloïde dont la période est égale à la distance parcourue par la préforme **2** pour une révolution complète autour de son axe **A.**

Sur les figures 1 et 2, on a représenté les préformes **2** avec le col **3** orienté en haut, mais cette représentation est arbitraire et illustrative, et les préformes **2** pourraient être orientées col en bas.

L'unité **1** de chauffe comporte un four **7** ayant au moins une paroi **8** rayonnante en regard de laquelle défilent les préformes **2.** Cette paroi **8** est tapissée d'une pluralité de sources **9** de rayonnement électromagnétique émettant de manière à la fois monochromatique (ou pseudo-monochromatique) et directive vers les préformes **2,** dans le domaine de l'infrarouge.

En variante, l'unité de chauffe comprend une pluralité de cavités tapissées de sources de rayonnement, dans chacune desquelles est reçue une préforme pour y être chauffée individuellement.

En théorie, une source monochromatique est une source idéale émettant une onde sinusoïdale de fréquence unique. En d'autres termes, son spectre en fréquence est constitué d'une seule raie de largeur spectrale nulle (Dirac).

Dans la pratique, une telle source n'existe pas, une source réelle étant au mieux quasi-monochromatique, c'est-à-dire que son spectre en fréquence s'étend sur une bande de largeur spectrale faible mais non nulle, centrée sur une fréquence principale où l'intensité du rayonnement est maximale. Par abus de langage, on a toutefois coutume de qualifier une telle source réelle de monochromatique. Par ailleurs, on qualifie de « pseudo-monochromatique » une source émettant de manière quasi-monochromatique sur un spectre discret comprenant plusieurs bandes étroites centrées sur des fréquences principales distinctes. On parle également de source multimodes.

En pratique, les sources **9** sont organisées par juxtaposition et superposition pour former une matrice **10.** Il s'agit par exemple de sources **9** laser, et de préférence de diodes laser. Selon un mode préféré de réalisation, les sources **9** sont des diodes laser à cavité verticale émettant par la surface (VCSEL), chaque diode **9** émettant par exemple un faisceau **11** laser d'une puissance unitaire nominale de quelques dizaines de milliWatt à une longueur d'onde située dans la plage des infrarouges courts et moyens - par exemple de l'ordre de $1\,\mu m$.

A l'échelle des préformes **2,** les diodes **9** peuvent être considérées comme des sources ponctuelles, qui émettent chacune un rayonnement directif, c'est-à-dire sous forme d'un faisceau **11** lumineux conique dont le demi-angle solide au sommet est fermé, et de préférence compris entre 10° et 60° (cf. la figure 2 où l'on a représenté des faisceaux **11** dont le demi-angle au sommet est de 10°). Le faisceau **11** peut être symétrique de révolution (i.e. à section circulaire), ou non symétrique de révolution (par exemple à section elliptique).

Une plaque **12** absorbante (ou réfléchissante) est disposée horizontalement dans l'interstice entre la paroi **8** rayonnante et les préformes **2,** au niveau de la collerette **6,** pour préserver le col **3** du rayonnement infrarouge.

L'objet de la présente demande n'est pas de décrire en détail la structure de la matrice **10** de diodes laser **9.** C'est pourquoi on a représenté la matrice **10** de manière simplifiée, sous forme d'une plaque, les diodes **9** apparaissant sous forme de points.

Selon un mode préféré de réalisation, illustré sur la figure 1, la matrice est subdivisée en plusieurs groupes **13** adjacents et indépendants de diodes **9,** chaque groupe **13** étant constitué par une colonne de diodes formant un sous-ensemble de la matrice **10.** Les colonnes **13** de diodes **9** peuvent être de largeur égale, ou différente. Dans ce cas, cette largeur peut diminuer (ou au contraire augmenter) le long du trajet des préformes **2.**

Cette architecture permet de réaliser une modulation de la puissance (on parle également de l'intensité) du rayonnement émis par les diodes **9,** soit en ajustant la puissance émise par les diodes **9** d'un ou plusieurs groupes **13** prédéfinis, soit en coupant (c'est-à-dire en éteignant) les diodes **9** d'un ou plusieurs groupes **13** prédéfinis.

En variante, ou en complément, l'unité **1** de chauffe peut être conçue pour permettre une modulation de la vitesse de défilement des préformes **2,** c'est-à-dire du temps d'exposition des préformes **2** au rayonnement.

Il est ainsi possible de moduler la puissance du rayonnement reçu par les préformes **2,** en modulant la puissance du rayonnement émis et/ou en modulant la vitesse de défilement des préformes **2** dans le four **7.**

La modulation de puissance de chaque colonne **13** de diodes **9** est réalisée par voie électronique, au moyen d'une unité **14** de contrôle sous forme d'un processeur intégré à un ordinateur et programmé à cet effet. La puissance des diodes **9,** qui peut être visualisée sur un moniteur de contrôle, est comprise entre une valeur $P_{min}$ minimale prédé-terminée (par exemple nulle) et une valeur $P_{max}$ maximale correspondant par exemple à la puissance nominale des diodes **9.** L'unité **14** de contrôle commande également la sélection des groupes **13** de diodes **9** à allumer ou éteindre (c'est-à-dire à régler sur la valeur $P_{min}$), ainsi que, le cas échéant, la vitesse de défilement des préformes **2.** A cet effet, l'unité **14** de contrôle est par exemple reliée à la roue dentée sur laquelle circule la chaîne ou la courroie d'entraînement des préformes **2.**

Comme cela est illustré sur la figure 1, l'unité **1** de chauffe est équipée d'une sonde **15** thermique reliée à l'unité **14** de contrôle et permettant d'effectuer une mesure de la température $T_{ext}$ d'une paroi **16** externe de la préforme **2** à la sortie du four **7,** que la sonde **15** soit située dans le four ou, comme illustré sur la figure 1, à l'extérieur de celui-ci (de la sorte, la température mesurée par la sonde **15** correspond de manière relativement précise à la température réelle de la paroi **16** externe à l'instant où la préforme 2 sort du four 7).

La mesure de la température $T_{ext}$ peut être ponctuelle (par exemple à mi-hauteur de la préforme **2,** auquel cas la sonde **15** est un simple capteur thermique. De préférence toutefois, la mesure de température vise à élaborer un profil thermique de la paroi **16** externe sur au moins une partie (et éventuellement la totalité) du corps **4,** sous la collerette **6.** Dans ce cas, la sonde **15** peut comprendre une série de capteurs répartis verticalement en regard du corps **4,** ou se présenter, comme illustré sur la figure 1, sous forme d'une une caméra thermique (infrarouge) agencée pour effectuer une thermographie complète de la paroi **16** externe.

Les mesures (ou les données thermographiques dans le cas d'une caméra thermique) sont communiquées à l'unité **14** de contrôle qui, en fonction de la température ainsi mesurée, ou du profil de température ainsi établi, est programmée pour commander une modulation :

- du temps d'exposition des préformes **2** au rayonnement infrarouge des sources **9** via l'extinction partielle de certains groupes **13** de diodes **9** et/ou l'adaptation de la vitesse de défilement des préformes **2,**
- et/ou de la puissance électrique fournie aux sources (et donc la puissance émise par les sources **9),** en tout ou en partie, et de préférence par colonnes **13,** de manière à maintenir la température $T_{ext}$ de la paroi **16** externe de la préforme **2** dans une gamme prédéterminée dont une borne inférieure est la température $T_g$ de transition vitreuse, notée $T_g$, de la matière, et dont une borne supérieure est égale à $1{,}8 \cdot T_g$ :

$$T_g \leq T_{ext} \leq 1{,}8 \cdot T_g$$

L'unité **14** de contrôle effectue les ajustements quant à l'allumage ou l'extinction des sources **9,** la vitesse de défilement des préformes 2 et/ou la puissance des sources **9** tant que la température n'est pas comprise dans la gamme $[T_g; 1{,}8 \cdot T_g]$.

Selon un mode préféré de réalisation, une température de consigne $T_c$ comprise dans la gamme $[T_g; 1{,}8 \cdot T_g]$ est programmée dans l'unité **14** de contrôle, et celle-ci effectue les ajustements tant que la température $T_{ext}$ n'est pas

égale (ou sensiblement égale, à une tolérance prédéterminée près, par exemple de l'ordre de quelques degrés) à la consigne $T_c$.

Dans le cas d'une mesure ponctuelle de température, la température $T_{ext}$ dont il est question est la température mesurée par la sonde **15** réduite à un simple capteur thermique.

Dans le cas d'une mesure thermographique effectuée par une caméra **15,** la température $T_{ext}$ désigne la température mesurée en tout point de la paroi **16** externe, c'est-à-dire que l'inégalité ci-dessus doit être vérifiée pour l'ensemble des températures mesurées sur la paroi **16** externe. Afin d'économiser le temps de traitement, l'unité **14** de contrôle peut être programmée pour extraire du profil thermique mesuré la valeur minimale $T_{min}$ et la valeur maximale $T_{max}$ de l'ensemble des valeurs, et se contenter de vérifier alors la double condition suivante :

$$T_{min} \geq T_g$$

$$T_{max} \leq 1{,}8 \cdot T_g$$

On sait qu'au-delà de sa température $T_g$ de transition vitreuse, un polymère thermoplastique est, par définition, déformable sans rupture.

Dans le cas présent, il ne suffit pas que la température $T_{ext}$ de la paroi **16** externe soit effectivement supérieure à la température $T_g$ de transition vitreuse ; il faut également que la température d'une paroi interne **17** de la préforme **2,** opposée à la paroi **16** externe, le soit également. Or, de manière inattendue, il a été constaté que la température - notée $T_{int}$ - de la paroi **17** interne est supérieure à la température $T_{ext}$ de la paroi **16** externe dans les conditions opératoires suivantes :

- le rayonnement auquel sont exposées les préformes **2** est infrarouge et monochromatique (ou, comme nous l'avons expliqué, pseudo-monochromatique) ;
- le matériau des préformes **2** est un polymère semi-transparent dans le domaine infrarouge, c'est-à-dire qu'il ne transmet que partiellement le rayonnement dans ce domaine ;
- la température de paroi externe est maintenue dans les bornes indiquées ci-dessus (Tg et 1,8·Tg).

Pour une définition plus précise des milieux semi-transparents, on pourra se référer à la thèse « Modélisation et optimisation numérique de l'étape de chauffage infrarouge pour la fabrication de bouteilles en PET par injection-soufflage », M. Bordival, Ecole des Mines de Paris, 2009. Le PET est typiquement un polymère semi-transparent.

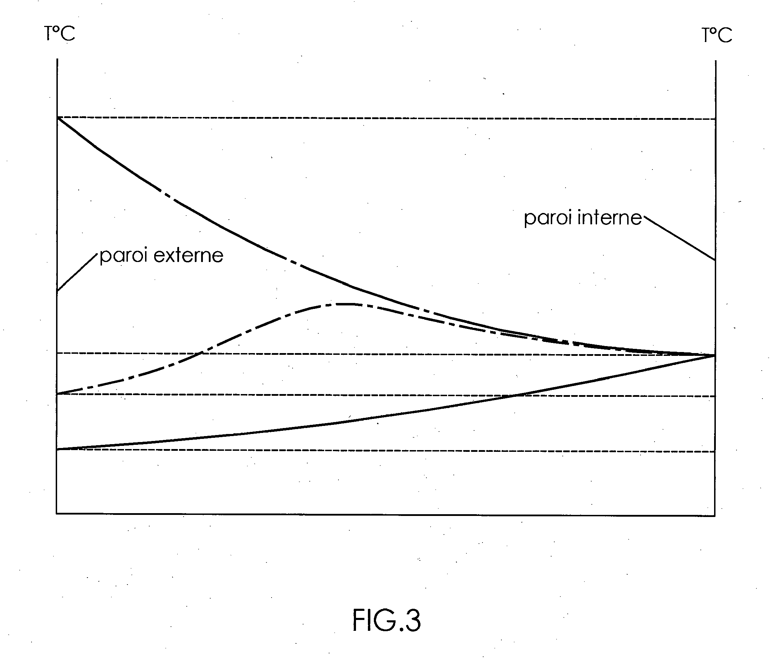

Il a également été constaté que, dans ces conditions, la température varie dans l'épaisseur de la préforme **2** entre la paroi **15** externe et la paroi **16** interne (en trait continu sur la figure 3) en étant strictement croissante.

Il en résulte une distribution de chaleur, dans l'épaisseur de la préforme **2,** différente de celle des procédés connus dans lesquels :

- soit le delta ($\Delta T = T_{int}-T_{ext}$) de température est négatif, la température étant décroissante entre la paroi externe et la paroi interne (en trait mixte long sur la figure 3), ce qui correspond à une chauffe classique non contrôlée,
- le delta de température est positif, la température étant croissante en moyenne entre la paroi externe et la paroi interne, mais présente un pic dans l'épaisseur (en trait mixte court sur la figure 3), ce qui correspond à une chauffe classique avec une tentative de contrôle par refroidissement de la paroi externe au moyen d'une ventilation forcée.

Dans le cas présent, la température dans l'épaisseur de la préforme est strictement croissante, ce qui permet d'effectuer un soufflage au cours duquel les contraintes induites lors de la formation du récipient sont minimisées, le delta ($\Delta T = T_{int}-T_{ext}$) de température positif et l'absence de pic de température entre la paroi **15** externe et la paroi **16** interne compensant la différence de taux d'étirage entre les parois **15, 16.** Il en résulte une capacité accrue de prise d'empreinte de la matière (et donc de formage du récipient).

En outre, la quantité d'énergie qu'il est nécessaire de fournir pour obtenir le profil de température souhaité, avec un delta de température positif, est inférieure à celle qu'il est nécessaire de fournir en appliquant les technologies connues, où l'on chauffe à haute température la paroi externe pour assurer un transfert énergétique suffisant vers la paroi interne, puis l'on ventile la paroi externe pour en diminuer la température et obtenir le delta de température. Il en résulte par conséquent des gains de consommation énergétique.

Le contrôle des paramètres de puissance et/ou de temps d'exposition est réalisé par l'unité **14** de contrôle.

Plus précisément, dans l'hypothèse où la température de la paroi **15** externe est inférieure à la température de transition vitreuse, l'unité **14** de contrôle commande :

- une augmentation de la puissance émise par les sources **9,** par exemple en l'incrémentant dans des proportions prédéterminées, soit localement sur une ou plusieurs colonnes **12,** soit sur l'ensemble de la matrice **10 ;**
- et/ou une augmentation du nombre de groupes **13** de diodes **9** allumées ;
- et/ou une diminution de la vitesse de défilement des préformes **2** dans le four **7.**

Dans l'hypothèse, inverse, où la température $T_{ext}$ de la paroi **15** externe est supérieure à 1,8·Tg, alors l'unité **14** de contrôle commande :

- une diminution de la puissance émise par les sources **9,** par exemple en la décrémentant dans des proportions prédéterminées, soit localement sur une ou plusieurs colonnes **12,** soit sur l'ensemble de la matrice **10** ;
- et/ou une diminution du nombre de groupes **13** de diodes **9** allumées ;
- et/ou une augmentation de la vitesse de défilement des préformes **2** dans le four **7.**

L'une seule de ces deux opérations peut être commandée par l'unité **13** de contrôle.
Si la priorité est de maintenir la cadence, alors l'option préférée est de moduler la puissance sans moduler la cadence. Si la priorité est de maintenir la puissance (par exemple dans le but de réaliser des économies d'énergies), alors l'option préférée est de moduler la vitesse de défilement.
Toutefois, il est envisageable que l'unité **14** de contrôle commande simultanément les deux opérations dans le but d'obtenir un bon compromis entre puissance consommée (que l'on souhaite minimale) et cadence de production (que l'on souhaite maximale).

## Revendications

1. Procédé de chauffe d'une ébauche **(2)** en matière plastique pour la fabrication d'un corps creux par formage à partir de l'ébauche (**2**), qui comprend les opérations consistant à :

   - introduire l'ébauche **(2)** dans un four **(7)** muni de sources **(9)** de rayonnement électromagnétique monochromatique ou pseudo-monochromatique émettant dans l'infrarouge ;
   - exposer l'ébauche **(2)** au rayonnement des sources **(9),** réglées à une puissance d'émission prédéterminée, pendant un temps d'exposition prédéterminé ;
   - mesurer une température ($T_{ext}$) sur une paroi **(16)** externe de l'ébauche **(2) ;**
   **caractérisé en ce qu'**il comprend une opération consistant à :
   - ajuster le temps d'exposition et/ou la puissance d'émission tant que ladite température ($T_{ext}$), mesurée à une sortie du four **(2),** n'est pas comprise entre Tg et 1,8·Tg, où Tg est la température de transition vitreuse de la matière.

2. Procédé selon la revendication 1, **caractérisé en ce que** la mesure de température est une mesure ponctuelle.

3. Procédé selon la revendication 1, **caractérisé en ce que** la mesure de température consiste à établir un profil thermique de la paroi externe de l'ébauche **(2)** au moyen d'une caméra **(15)** thermique.

4. Procédé selon l'une des revendications 1 à 3, **caractérisé en ce que** la variation du temps d'exposition est effectuée par coupure de certaines sources **(9),** ou par coupure de groupes **(13)** de sources **(9).**

5. Procédé selon l'une des revendications 1 à 4, **caractérisé en ce que** la variation du temps d'exposition est effectuée par variation d'une vitesse de défilement de l'ébauche **(2)** dans le four **(7).**

6. Produit programme d'ordinateur destiné à être stocké en mémoire d'une unité de traitement et/ou stocké sur un support mémoire lisible par un lecteur d'une unité de traitement, comprenant des instructions pour la mise en oeuvre des opérations d'un procédé selon l'une des revendications précédentes.

7. Unité **(1)** de chauffe d'ébauches **(2)** de corps creux en matière plastique, qui comprend :

   - un four **(7)** muni d'une pluralité de sources **(9)** de rayonnement électromagnétique monochromatique ou pseudo-monochromatique émettant dans l'infrarouge, pour la chauffe des ébauches **(2)** à une puissance d'émission prédéterminée, et pendant un temps d'exposition prédéterminé,
- une sonde **(15)** thermique disposée à une sortie du four **(7),** agencée pour effectuer une prise de température ($T_{ext}$) sur une paroi **(16)** externe des ébauches **(2) ;**
**caractérisée en ce qu'**elle comprend en outre
- une unité **(14)** de contrôle programmée pour ajuster la puissance d'émission et/ou le temps d'exposition tant que ladite température ($T_{ext}$) n'est pas comprise entre Tg et 1,8·Tg, où Tg est la température de transition vitreuse de la matière.

8. Unité **(1)** de chauffe selon la revendication 7, **caractérisée en ce que** les sources **(9)** de rayonnement électromagnétique sont des lasers.

9. Unité **(1)** de chauffe selon la revendication 8, **caractérisée en ce que** les sources **(9)** de rayonnement électromagnétique sont des diodes laser.

10. Unité **(1)** de chauffe selon la revendication 8, **caractérisée en ce que** les sources **(9)** de rayonnement électromagnétique sont des diodes laser de type VCSEL.

11. Unité (1) de chauffe selon l'une des revendications 7 à 10, **caractérisé en ce que** les sources **(9)** sont organisées en colonnes **(13)** dont la puissance peut être modulée séparément.

## Patentansprüche

1. Verfahren zum Erwärmen eines Rohlings (2) aus Kunststoff für die Herstellung eines Hohlkörpers durch Formung ausgehend von dem Rohling (2), das die folgenden Schritte umfasst, die darin bestehen:

   - den Rohling (2) in einen Ofen (7) einzuführen, der mit Quellen (9) für monochromatische oder pseudo-monochromatische elektromagnetische Strahlung, die im Infrarot emittieren, versehen ist;
   - den Rohling (2) während einer vorgegebenen Aussetzungszeit der Strahlung der Quellen (9), die auf eine vorgegebene Emissionsleistung reguliert werden, auszusetzen; und
   - eine Temperatur ($T_{ext}$) an einer äußeren Wand (16) des Rohlings (2) zu messen;
   **dadurch gekennzeichnet, dass** es einen Schritt umfasst, der darin besteht:
   - die Aussetzungszeit und/oder die Emissionsleistung solange einzustellen, wie die Temperatur ($T_{ext}$), die am Ausgang des Ofens (2) gemessen wird, nicht zwischen Tg und 1,8 · Tg liegt, wobei Tg die Glasübergangstemperatur des Materials ist.

2. Verfahren nach Anspruch 1, **dadurch gekennzeichnet, dass** die Messung der Temperatur eine punktuelle Messung ist.

3. Verfahren nach Anspruch 1, **dadurch gekennzeichnet, dass** die Messung der Temperatur darin besteht, ein thermisches Profil der Außenwand des Rohlings (2) mittels'einer Wärmekamera (15) zu erstellen.

4. Verfahren nach einem der Ansprüche 1 bis 3, **dadurch gekennzeichnet, dass** die Veränderung der Aussetzungszeit durch Abschalten bestimmter Quellen (9) oder durch Abschalten von Gruppen (13) von Quellen (9) erfolgt.

5. Verfahren nach einem der Ansprüche 1 bis 4, **dadurch gekennzeichnet, dass** die Veränderung der Aussetzungszeit durch Verändern einer Geschwindigkeit des Durchgangs des Rohlings (2) durch den Ofen (7) folgt.

6. Computerprogrammprodukt, das dazu bestimmt ist, im Speicher einer Verarbeitungseinheit gespeichert zu werden und/oder auf einem von einem Leser einer Verarbeitungseinheit lesbaren Speicherträger gespeichert zu werden und das Anweisungen für die Ausführung der Schritte eines Verfahrens nach einem der vorhergehenden Ansprüche enthält.

7. Einheit (1) zum Erwärmen von Rohlingen (2) von Hohlkörpern aus Kunststoff, die Folgendes umfasst:

   - einen Ofen (7), der mit mehreren Quellen (9) für monochromatische oder pseudo-monochromatische elektromagnetische Strahlung, die im Infrarot emittieren, versehen ist, um Rohlinge (2) mit einer vorgegebenen Emissionsleistung und während einer vorgegebenen Aussetzungszeit zu erwärmen,

- einen Wärmefühler (15), der an einem Ausgang des Ofens (7) angeordnet ist und dafür ausgelegt ist, eine Temperatur ($T_{ext}$) an einer Außenwand (16) der Rohlinge (2) zu erfassen; **dadurch gekennzeichnet, dass** sie außerdem Folgendes umfasst:
- eine programmierte Steuereinheit (14), um die Emissionsleistung und/oder die Aussetzungszeit solange einzustellen, wie die Temperatur ($T_{ext}$) nicht zwischen Tg und 1,8 · Tg enthalten ist, wobei Tg die Glasübergangstemperatur des Materials ist.

**8.** Erwärmungseinheit (1) nach Anspruch 7, **dadurch gekennzeichnet, dass** die Quellen (9) für elektromagnetische Strahlung Laser sind.

**9.** Erwärmungseinheit (1) nach Anspruch 8, **dadurch gekennzeichnet, dass** die Quellen (9) für elektromagnetische Strahlung Laserdioden sind.

**10.** Erwärmungseinheit (1) nach Anspruch 8, **dadurch gekennzeichnet, dass** die Quellen (9) für elektromagnetische Strahlung Laserdioden vom VCSEL-Typ sind.

**11.** Erwärmungseinheit (1) nach einem der Ansprüche 7 bis 10, **dadurch gekennzeichnet, dass** die Quellen (9) in Spalten (13) organisiert sind, deren Leistung getrennt moduliert werden kann.

## Claims

**1.** Method for heating a preform (2) made of plastic material for the production of a hollow body by forming from the preform (2), which comprises the operations consisting in:

- introducing the preform (2) into an oven (7) provided with sources (9) of monochromatic or pseudo-monochromatic electromagnetic radiation emitting in the infrared;
- exposing the preform (2) to the radiation from the sources (9), set to a predetermined emission power, for a predetermined exposure time;
- measuring a temperature ($T_{ext}$) on an outer wall (16) of the preform (2);
**characterized in that** it comprises an operation consisting in:
- adjusting the exposure time and/or the emission power as long as said temperature ($T_{ext}$), measured at an output of the oven (2), does not lie between Tg and 1.8• Tg, in which Tg is the glass transition temperature of the material.

**2.** Method according to Claim 1, **characterized in that** the temperature measurement is a spot measurement.

**3.** Method according to Claim 1, **characterized in that** the temperature measurement consists in establishing a thermal profile of the outer wall of the preform (2) by means of a thermal camera (15).

**4.** Method according to one of Claims 1 to 3, **characterized in that** the exposure time is varied by cutting off certain sources (9), or by cutting off groups (13) of sources (9).

**5.** Method according to one of Claims 1 to 4, **characterized in that** the exposure time is varied by varying a rate of progress of the preform (2) in the oven (7).

**6.** Computer program product intended to be stored in memory of a processing unit and/or stored on a memory medium that can be read by a reader of a processing unit, comprising instructions for the implementation of the operations of a method according to one of the preceding claims.

**7.** Unit (1) for heating preforms (2) of hollow bodies made of plastic material, which comprises:

- an oven (7) provided with a plurality of sources (9) of monochromatic or pseudo-monochromatic electromagnetic radiation emitting in the infrared, for the heating of the preforms (2) at a predetermined emission power, and for a predetermined exposure time,
- a thermal probe (15) arranged at an output of the oven (7), arranged to take a temperature ($T_{ext}$) on an outer wall (16) of the preforms (2);
**characterized in that** it further comprises

- a control unit (14) programmed to adjust the emission power and/or the exposure time as long as said temperature ($T_{ext}$) does not lie between $T_g$ and $1.8 \cdot T_g$, in which Tg is the glass transition temperature of the material.

8. Heating unit (1) according to Claim 7, **characterized in that** sources (9) of electromagnetic radiation are lasers.

9. Heating unit (1) according to Claim 8, **characterized in that** the sources (9) of electromagnetic radiation are laser diodes.

10. Heating unit (1) according to Claim 8, **characterized in that** the sources (9) of electromagnetic radiation are laser diodes of VCSEL type.

11. Heating unit (1) according to one of Claims 7 to 10, **characterized in that** the sources (9) are organized in columns (13), the power of which can be modulated separately.

FIG.1

FIG.2

FIG.3

## RÉFÉRENCES CITÉES DANS LA DESCRIPTION

**Documents brevets cités dans la description**

- FR 2935924, SIDEL

- US 20070096352 A

**Littérature non-brevet citée dans la description**

- **M. BORDIVAL.** *Modélisation et optimisation numérique de l'étape de chauffage infrarouge pour la fabrication de bouteilles en PET par injection-souf-flage,* 2009